(19)

Europäisches
Patentamt
European
Patent Office
Office européen
des brevets

(11) **EP 2 271 184 A1**

(12) **EUROPEAN PATENT APPLICATION**

(43) Date of publication:
**05.01.2011 Bulletin 2011/01**

(51) Int Cl.:
***H05B 37/02*** *(2006.01)*

(21) Application number: **09164314.8**

(22) Date of filing: **01.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicants:
• **Osram Gesellschaft mit beschränkter Haftung**
**81543 München (DE)**
• **OSRAM S.P.A. - SOCIETA' RIUNITE OSRAM EDISON CLERICI**
**20144 Milano (IT)**
Designated Contracting States:
**IT**

(72) Inventors:
• **Toscan, Matteo**
**31010, Maser (Treviso) (IT)**
• **Capeleto, Simone**
**35131, Padova (IT)**
• **Sutar, Shantanu**
**560078, Bangalore (IN)**

(74) Representative: **Bosotti, Luciano**
**Buzzi, Notaro & Antonielli d'Oulx**
**Via Maria Vittoria, 18**
**10123 Torino (IT)**

(54) **A lighting method and system, for instance for lighting streets and roads**

(57) A lighting system for lighting a path (S) for travel by a moving object (V) includes an array of lighting sources (1, 10) which admit a lighting level between a first lighting level (P) and a second lighting level (B), wherein the first lighting level (P) is higher than the second lighting level (B). Sensor means (12) detect the position and velocity of a moving object (V) travelling along said path (S), and one or more controllers (14) operatively connected to the sensor means (12) activate to the first, higher lighting level (P) a set of lighting sources (1, 10) in correspondence with the position of the moving object (V). The number of lighting sources (1, 10) activated is a function of the velocity of the moving object (V). The activated set of lighting sources (1, 10) thus provides an area of increased luminosity (IL) moving together with the moving object (V).

FIG. 1

EP 2 271 184 A1

## Description

Field of the invention

This disclosure relates to lighting of spaces.

This disclosure was devised by paying specific attention to its possible use in lighting a path travelled by a moving object such as e.g. streets or roads to be travelled by vehicles and/or pedestrians.

Description of the related art

Lighting of open spaces such as streets, roads, squares and the like generally provides for lighting sources being fully activated e.g. throughout the night even if traffic is reduced or possibly non-existing. This is an inefficient use of electrical energy, which is wasted in providing largely unnecessary lighting. In fact, street lighting is one of the most relevant items in public electrical power consumption and generates significant costs from both the economical and the environmental standpoint. Also, at least in certain circumstances (for instance natural parks) lighting as required to ensure safe and comfortable driving in streets and roads may represent an undesired pollution factor for the environment.

Certain lighting systems already exist (e.g. for use in closed spaces such as buildings) where conventional switches to be operated manually are replaced by sensors such as e.g. Passive InfraRed (PIR) sensors capable of detecting motion in the vicinity of a lighting source to turn it on automatically. These sensors are primarily intended to substitute manual switches and thus their action may be largely unrelated with the actual needs of the user. For instance, all the lights in a large space may be automatically turned on even if a user just momentarily transits through a small portion of that space.

Also, the lighting action may be completely unrelated to e.g. the motion and/or velocity of the user. For instance, when wishing to drive a car into a garage a driver may need to wait that the whole drive to the garage is fully lit before being able to proceed towards the garage. Conversely, the lighting along the drive may be unnecessarily maintained in turned-on condition (even for long) after the car has been parked in the garage and the driver has gone.

Additionally, these systems generally provide for the lights being either fully turned-on or completely turned-off completely. This may result in certain spaces being left completely in the dark even when a moderate lighting level could be useful in providing safety and security.

Object and summary of the invention

An object of the invention is to provide an improved lighting solution, e.g. for open spaces such as streets, roads and the like, which may dispense with the disadvantages hinted at in the foregoing.

According to the invention, that object is achieved by means of a method having the features set forth in the claims that follow. The invention also relates to a corresponding system.

The claims form an integral part of the disclosure of the invention as provided herein.

In various embodiments, a mechanism is proposed to adapt the lighting level of spaces such as streets and the like based on traffic; this helps in reducing electrical energy consumption when traffic is rare or even non-existing.

Various embodiments are based on the recognition that e.g. during the night, the flow of traffic in the streets varies as the night progresses towards the following day; consequently, when traffic is nil (i.e. when there are no vehicles in the streets) the possibility exists of reducing street lighting intensity to minimize energy consumption while still ensuring a background lighting level for safety and security reasons.

In various embodiments, when a moving object such as a vehicle travels along e.g. a street or road, light intensity is dynamically temporarily increased to meet the requirements of this vehicle and then reduced to a minimum level after transit of the vehicle.

Various embodiments apply also to other types of moving objects such as pedestrians, bicycle riders, and so on. Various embodiments are applicable also to groups of moving objects such as e.g. cars driving in opposite directions thus avoiding the undesired "dazzling phenomenon" (blinding effect) possibly caused in a driver by the headlights of an incoming car in the opposite direction.

Brief description of the annexed representations

The invention will now be described, by way of example only, with reference to the annexed representations, wherein:

- figures 1 to 3 are schematically representative of certain embodiments of lighting systems,
- figure 4 is a schematic representation of a lighting source for possible use in the context of figures 1 to 3,
- figure 5 is a diagram representative of operation of a lighting source as represented in figure 4,
- figures 6 and 7 are representative of possible joint operation of a plurality of lighting sources along a travel path such as e.g. a road street, and
- figure 8 is a flow diagram exemplary of control of lighting sources in a lighting system.

Detailed description of embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

Various embodiments are based on the recognition that lighting requirements of moving objects travelling along a road or street S may be different.

Specifically, the speed at which an object such as a vehicle V moves has an impact on how far the driver (this designation obviously also encompasses a person riding a bike, a motorbike and the like as a pedestrian "driving" himself when walking) needs to see ahead to obtain an early warning of any obstacles and act/react adequately. Having such a "moving object" V being merely followed by a light spot while the portions of the street S (well) ahead and behind are completely dark may result in an unpleasant situation, possibly for both safety and security reasons.

For that reason, various embodiments herein provide for the moving object V being "followed" by a zone of increased luminosity IL which provides a zone of (increased) visibility ahead and behind the object while the other portions of the travel path are lit at a lower (yet not nil) background level.

Having the increased visibility zone IL "follow" the moving object V involves increasing the light intensity not just of one lighting source (such as a lamppost) but rather of a plurality (i.e. a group or set) in the array of lighting sources 1 provided for lighting the travel path S. In various embodiments, the number of lighting sources 1 involved in such a dynamic lighting process (and thus the extension of the increased visibility zone IL) is a function of the velocity of the moving object V.

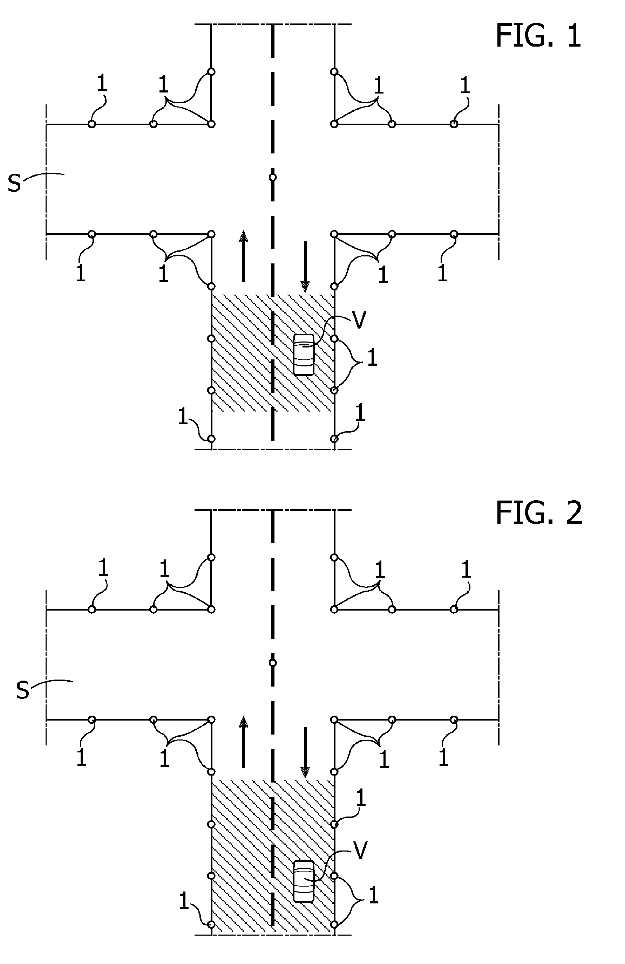

For instance, figures 1 and 2 refer to a moving object such as a vehicle V moving at a speed which in figure 1 is lower than the speed in figure 2. Direct comparison of figures 1 and 2 shows that in the case of figure 2, where the vehicle V travels faster, the increased visibility zone IL is made longer in order to provide the driver with a more extended view of the street ahead of him or her commensurate to the increased need for visibility with increasing speed.

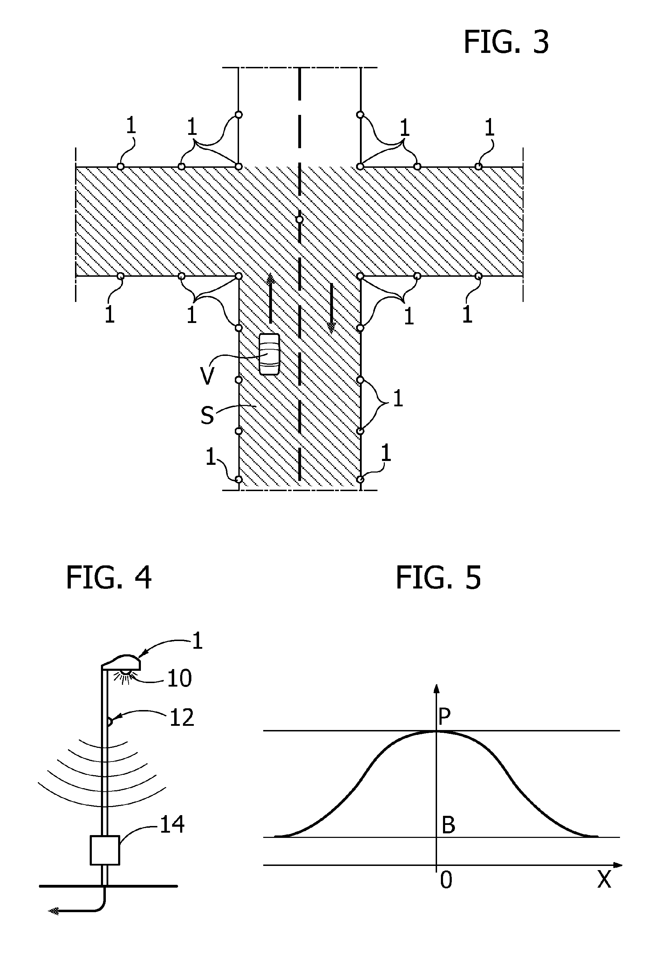

Figure 3 shows that plural lighting sources 1 are also involved in the case of intersections of roads or streets, where the moving object V has the possibility of going either left or right or straight ahead. The increased visibility zone IL may thus extend in all three directions (namely left, right and straight ahead).

Limiting full lighting to the increased visibility zone IL while the rest of the travel path (or open space in general) is lit to a lower background level dramatically reduces electrical energy consumption in comparison with conventional systems where all the lighting sources 1 are continuously lit at full intensity.

Figure 4 is exemplary of a possible structure of a lighting source 1 (for instance a light pole or a lamppost) 1 adapted for providing lighting patterns as previously described in connection with figures 1 to 3.

The lighting sources (or "lampposts") 1 as shown in any of figures 1 to 3 may be distributed in correspondence with the spaces illustrated according to any conventional pattern (i.e. array) used for that purpose (e.g. lighting sources 1 arranged along the sides of a road or street and/or the centreline thereof, overhanging at the centre of an intersection, and so on).

In addition to a "lamp" 10 (such as a LED-based lighting source including one or more radiation sources, i.e. one or more LED modules), the exemplary lamppost 1 of figure 4 also includes a sensor 12 capable of sensing a moving object (e.g. a vehicle) passing in the vicinity of the lighting source 1.

Reference numeral 14 denotes a control system (e.g. a microprocessor or microcontroller) adapted to perform two basic functions, namely:

- selectively varying the intensity of the lighting radiation emitted by the lamp 10 between a first (peak) level P and a second (preferably non-nil) level B; and
- permitting communication i.e. exchange of information related to neighbouring lighting sources 1 as better detailed in the following.

The diagram of figure 5 schematically represents a possible modulation (i.e. controlled "dimming") of the lighting intensity of the radiation source or lamp 10 as a function of the position of a moving object passing nearby.

Specifically:

- the left-hand portion of the diagram of figure 5 (negative abscissa scale) is representative of a moving object V gradually approaching the lighting source 1,
- the right-hand portion of the diagram of figure 5 (positive abscissa scale) is representative of a moving object V gradually moving away from the lighting source 1, and
- the zero value of the abscissa scale in figure 5 represents a moving object V located "at" (i.e. at the closest position foreseen) the lighting source 1.

The position (and velocity) of the moving object V can be detected - in a manner known per se - from the sensing signal(s) produced by the sensor 12 (or a plurality of sensors 12). The controller 14 may be configured to gradually increase the lighting intensity emitted by the lamp 10 as the moving object V approaches the lighting source 1 to then gradually reduce it as the moving object V moves away from the lighting source 1.

Performing such a "dimming" action of a lamp 10 such as a LED-based lighting source as a function of a dimming signal (as produced by the controller 14) is conventional in the art, which makes it necessary to provide a detailed description herein.

In various embodiments, dynamically creating a zone of increased luminosity as the zone IL depicted in figures 1 to 3 and letting it follow a moving object V generally involves joint, co-ordinate operation (i.e. coordinated sequential increase and sequential decrease of luminosity) of a plurality of lighting sources 1 arranged along the path of travel of the moving object.

The controllers 14 thus permit communication, i.e. exchange of information related to neighbouring lighting sources 1. Exchange of information may also involve the sensors 12 associated therewith. In fact, the sensors 12 associated with each lighting source 1 (or even just some of the lighting sources 1 in the system) are adapted to identify a moving object V against the fixed background while also being capable of estimating (preferably in conjunction with other sensors 12) the position and velocity (direction included) of the moving object V.

The information thus acquired can be used to calculate the required length of the increased lighting/visibility zone IL (i.e. the number of lighting sources 1 included in the set of sources to be activated at the higher level P to produce the zone IL).

Via the associated controller 14, each sensor 12 can thus send its gathered information to the controllers 14 associated with neighbouring sources 1 for further action, i.e. establishing what sources 1 belong to the zone IL, so that the lamps 10 of those sources 1 (temporarily) belonging to the zone IL may increase their light intensity in a coordinate manner (i.e. essentially together). As the moving object V passes under a "next" source 1 in the direction of travel of the object V, the sensor 12 associated therewith acquires the information about the moving object V, processes it in the same way as the previous lamppost and then sends that information to the source 1 down the travel path of the object V in the zone IL. All the sources 1 involved may thus act in such a way as to provide a higher light intensity for the zone IL.

An exemplary underlying principle of controlling the light intensity emitted by the "lamps" 10 of neighbouring lighting sources 1 may be, e.g.:

- the light intensity of the lamp 10 of a lighting source 1 which has just become a "member" of the set of sources providing the increased luminosity zone IL starts increasing at a predetermined rate towards the increased (e.g. peak) level P;
- the lamp 10 of a lighting source 1 which was already a member of that set continues to operate at the increased light level P; and

- the light intensity of the lamp 10 of a lighting source 1 which has just been excluded from the set starts decreasing at a predetermined rate towards the background or base level B.

In that way, the zone IL is capable of following the moving object V by ensuring that for faster moving objects the length of the zone IL is made longer in order to provide the driver with an extended visibility and thus the possibility of detecting and properly reacting to any unexpected circumstances along the path travelled.

In an embodiment, adjacent lighting sources 1 communicate with each other, in that each associated controller 14 communicates with an homologous controller associated with at least one adjacent lighting source 1 (for instance a "previous" lighting source 1 and "subsequent" lighting source 1 in the direction of travel of the moving object V).

Communication between adjacent controllers 14 (i.e. between adjacent lighting sources 1) may be via any known means such as e.g. short-range radio. For instance, four channels (provided by any known communication means) may provide connectivity of each lighting source 1 with four neighbouring lighting sources 1 (i.e. front, rear, left and a right directions). Communication between lighting sources 1 can be via hopping communication packets. Communication between the various sources 1 to coordinate their traffic sensing and light dimming features can be provided via a Digital Addressable Lighting interface (DALI).

Also, it will be appreciated that the sensing devices such as the sensor 12 for detecting information on the zone to be lit (presence of cars and/or pedestrians, ambient light, and so on) need not necessarily be associated with the lighting sources. The embodiment of figure 4, wherein a sensor 12 is schematically shown mounted on a pole carrying a lamp 10 does in no way represent a mandatory requirement: sensors 12 can be carried e.g., by respective supports such as poles or the like.

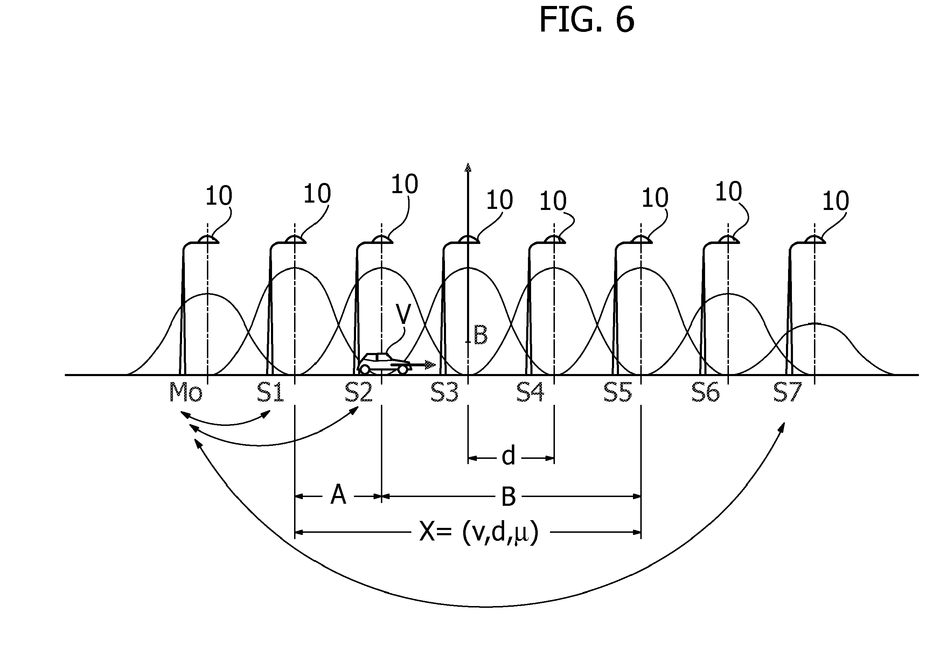

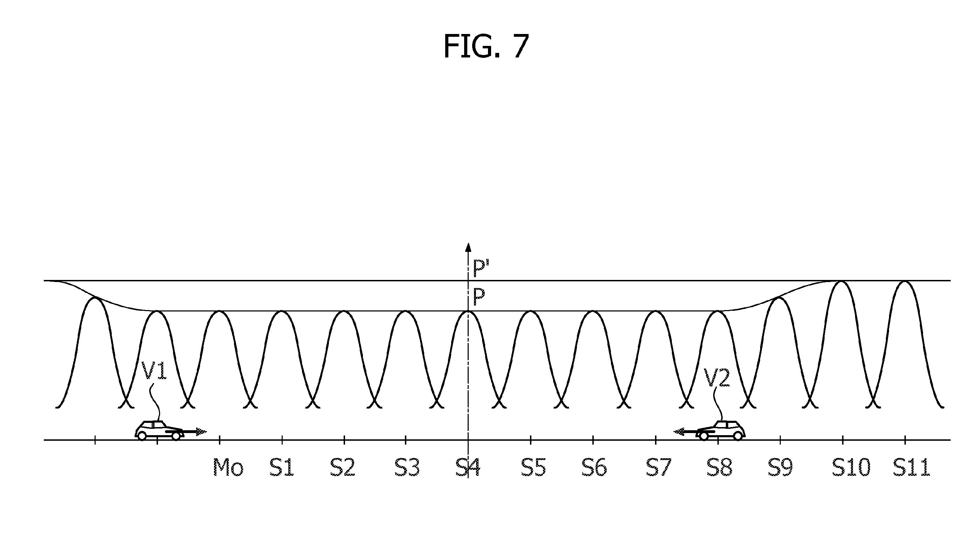

The diagrams of figures 6 and 7 further develop on the possible link between adjacent sources 1 which, for the purposes of operation of the system, can be arranged in a hierarchical architecture.

Such an architecture includes a master source Mo or, more precisely, a source whose associated controller 14 acts as a master control unit for the homologous controllers 14 associated with a plurality of "slave" sources S1, S2, S3, ... and so on. In certain embodiments, the "master" processing capability of such a system may be a distributed processing capability residing over plural sources 1. However, for the sake of simplicity, the following description will refer to a master processing capability concentrated with a single "master" source.

The system considered in figure 6 may be a street lighting system consisting of a series of sources 1 wherein:

- the "master" source Mo communicates with all the "slave" sources S1, S2, ....
- the various sensors 12 associated with the sources in question (this needs not necessarily be a one-to-one relationship insofar as e.g. a single sensor 12 may in fact cover plural sources 1) monitor the zone of interest - e.g. a street or road - and send to the master source Mo information on the status of the street such as the presence of vehicles, pedestrians (namely "moving objects" V) plus weather conditions, and so on.

The controller 14 in the master source Mo will thus implement a procedure defining a given illumination level for each lamp 10 in any of the light sources M0, S1, S2, ..., as a function of the state of the zone of interest and the requirements of the moving object V in terms of increased lighting zone IL.

On the basis of the data provided by the sensors 12, the procedure in question sets a given light intensity (i.e. "dimming") level for each lamp 10.

In certain embodiments, a "low" background (bias) level of illumination B is guaranteed for pedestrians while increased lighting to the "high" (peak) level P is provided only in respect of a motor vehicle passing. In that way, a significant amount of electrical energy is saved where no car traffic exists (e.g. during late night hours, when road traffic is reduced), while ensuring that the whole area covered is not completely left in the dark, thus providing increased safety and security for pedestrians.

In the diagram of figure 5, the high (peak) level P may represent the maximum illumination the lamp 10 can provide while the base (bias) may correspond to a background illumination level to achieve a minimum desired illumination level required for all conditions.

In certain embodiments, the "high" level of lighting may be modulated as a function of the ambient conditions (e.g. by using a higher level in conditions of reduced visibility such as fog, rain and the like). On the basis of the conditions of the area to be illuminated, an optimum level for the "high" level can thus be selected between the bias level B and the peak level P, with the optimum level being an illumination level as provided by the street lamp 10 which is sufficient to achieve e.g. safe and comfortable driving illumination level.

The procedure implemented in the system (irrespective of whether in a centralized or distributed fashion) may lead to calculating an optimum dimming level for each lamp 10. Such an "optimum" level will guarantee in each portion of the space illuminated an adequate level of illumination, as a function of the presence of vehicles/pedestrian and visibility (e.g. weather conditions). Global optimisation can be achieved by taking into account the estimated vehicle velocity, i.e. its speed and direction of movement.

A proper procedure may be devised to implement such a solution starting from the basic principles considered in the following.

For instance, figure 6 refers to the case of a moving object such as a vehicle V moving (from left to right) along a travel path served by a master source M0 and a plurality of slave sources S1, S2, S3, .....

In an embodiment, X will denote the length of the zone IL, that is the length of the street/road stretch over which the lamps 10 in the sources 1 will guarantee the desired street illumination level for the increased visibility zone IL.

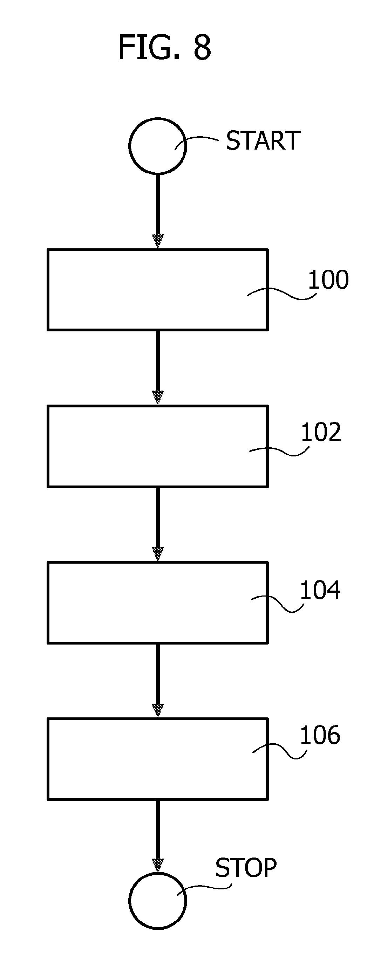

With reference to the flow chart of figure 8, after a START step, in a step 100, the controller 14 associated with the master source Mo which supervises operation of the whole lighting system M0, S1, S2... will collect from the sensors 12 data/signals representative of the ambient conditions in the area covered by the lighting system considered herein and the possible presence of any moving objects e.g. a vehicle V in the area covered by the lighting system M0, S1, S2....

In a step 102, the controller 14 in question will process the data/signals from the sensors 12 to estimate at least two coefficients, namely:

- a visibility coefficient $\mu$ (depending on weather conditions), and
- the position and velocity **v** of the moving object (vehicle) V, this data also including direction information.

In a step 104, starting from $\mu$, **v** and the distance d between adjacent sources (here assumed to be constant for the sake of simplicity), the "master" controller 14 will calculate the length X of the zone IL as well as an optimum level of lighting (dimming) for each source 1 which permits to achieve over the whole stretch considered a required level of street illumination.

In certain embodiments, the peak level P is taken as the lighting level to be provided when the moving object V is passing, and thus the length X will be the primary parameter to be calculated, e.g.:

$$(P, X) = f(v, d, \mu)$$

In a step 106 the controller 14 in the master source Mo communicates to the controllers 14 in the slave sources S1, S2, S3,... (for instance through a digital interface such as DALI) the required dimming level for each lamp 10 so that the desired dynamic lighting pattern is achieved.

In an embodiment, illumination in proximity of a vehicle V could be a lighting pattern where the "high" level of illumination is ensured over a length X partly behind and partly in front of the vehicle V. For instance, the "high" level of illumination may be ensured:

- behind the vehicle V over a distance equal to A% of X, and
- in front (i.e. ahead) of the vehicle V over B% of X (for instance A=10 and B=90).

The length over which the road is lit ahead of the vehicle, that is the value B%.X, may be selected to approximately correspond (preferably in excess) to the safety braking distance as determined by certain basic rules (such as e.g. the "square" rule: 60 Km/h >>> 36 meters; 70 Km/h >>>> 49 meters; 80 Km/h >>>> 64 meters; 90 Km/h >>>> 81 meters).

Judiciously selecting those values (which may also be based on direct experimental data) may render the variation of lighting completely unnoticed by the driver of the vehicle V provided X is sufficiently high.

The sequence described in the flowchart of figure 8 may thus come to a stop to be started again as soon as any of sensors 12 detects the presence of another moving object.

This procedure can be adapted in such a way that when continuous traffic is detected, the dynamical control of lighting intensity as described in the foregoing is discontinued by switching the lighting system to static (i.e. steady intensity level) operation while dynamic operation (i.e. variable intensity control) is resumed when traffic becomes again reduced.

The possibility of decreasing the illumination level when illumination is not required leads to significant energy savings by reducing one of the major sources of public power consumption. Conversely, the possibility of reducing power consumption may stimulate installation of lighting systems in areas (for instance streets) for which conventional, steady, full intensity illumination would be inevitably regarded as unnecessary.

The availability of (dynamically modulated) light intensity may be a definite asset in conditions as depicted in figure 7, namely in order to prevent any dazzling phenomenon (blinding effect) which occurs when two vehicles V1, V2 travelling in opposite directions approximate each other and the headlights of one of the cars may dazzle the driver in the other car.

In such a situation as depicted in figure 7, operation as previously described in connection with figure 6 may lead to both cars being "followed" by increased illumination areas IL with the result of reducing the contrast between the ambient light and the direct light from the vehicle coming in the opposite direction thus reducing the blinding effect.

Of course, without prejudice to the underlying principles of the invention, details and embodiments may vary, even significantly, with respect to what has been described by way of example only without departing from the scope of the invention as defined by the annexed claims.

**Claims**

1. A method of providing lighting over a path (S) of travel of a moving object (V), the method including:

    - providing along said path (S) an array of lighting sources (1, 10), said lighting sources (1, 10) admitting a lighting level selected between at least a first lighting level (P) and a second lighting level (B), wherein said first lighting level (P) is higher than said second lighting level (B),
    - detecting (12) the position and velocity of a moving object (V) travelling along said path (S), and
    - activating to said first, higher lighting level (P) a set of lighting sources (1, 10) in said array in correspondence with the position of said moving object (V), wherein the number of lighting sources (1, 10) in said activated set is a function of the velocity of said moving object (V), whereby said activated set of lighting sources (1, 10) provides an area of increased luminosity (IL) moving along said path (S) together with said moving object (V).

2. The method of claim 1, wherein said second lighting level (B) is a non-zero lighting level.

3. The method of claim 1 or claim 2, including at least one of:

    - gradually increasing the luminosity of said lighting sources (1, 10) as said moving object (V) approaches the lighting source (1, 10), and
    - gradually decreasing the luminosity of said lighting sources (1, 10) as said moving object moves away from the lighting source (1, 10).

4. The method of any of the previous claims, including:

    - detecting a level of visibility ($\mu$) in correspondence with said path (S) for travel by a moving object (V), and
    - selectively adjusting said first lighting level (P) as a function of said level of visibility ($\mu$).

5. The method of any of the previous claims, including activating to said first level (P) a set of said lighting sources (1) over a first distance (A) behind said moving object (V) and over a second distance (B) in front of said moving object (V), wherein said second distance (B) is longer than said first distance (A).

6. The method of claim 5, wherein said first (A) and said second (B) distances are about 10% and 90%, respectively, of the length of said area of increased luminosity (IL) moving along said path together with said moving object (V).

**7.** The method of any of the previous claims, wherein said array of lighting sources (1, 10) includes lighting sources (1, 10) arranged both along said path (S) for travel by a moving object (V) and along at least one further path crossing said path (S) for travel by a moving object (V).

**8.** A lighting system for lighting a path (S) for travel by a moving object (V), the system including:

- an array of lighting sources (1, 10) arranged along said path (S), said lighting sources (1, 10) admitting at least a first lighting level (P) and a second lighting level (B), wherein said first lighting level (P) is higher than said second lighting level (B),
- sensor means (12) to detect the position and velocity of a moving object (V) travelling along said path (S), and
- at least one controller (14) operatively connected to said sensor means (12) and said array of lighting sources (1, 10) to activate to said first, higher lighting level (P) a set of lighting sources (1, 10) in said array in correspondence with the position of said moving object (V), wherein the number of lighting sources (1, 10) in said activated set is a function of the velocity of said moving object (V), whereby said activated set of lighting sources (1, 10) provides an area of increased luminosity (IL) moving along said path together with said moving object (V).

**9.** The system of claim 8, including a plurality of said lighting sources (1, 10) in said array, each source having an associated said sensor means (12).

**10.** The system of claim 9, wherein said lighting source (1, 10) and said associated sensor (12) are carried by a common structure such as a pole.

**11.** The system of any of claims 8 to 10, including a communication network between the lighting sources (1) in said array, wherein the position and velocity of a moving object (V) travelling along said path (S) are sensed by a plurality of said sensor means (12) connected via said network.

**12.** The system of any of claims 8 to 11, including a communication network between the lighting sources (1) in said array, as well as a master controller (Mo) associated with one lighting source (1, 10) in said array plus a set of slave controllers (S1, S2, ...) associated with other lighting sources (1, 10) in said array, said master controller (Mo) and said slave controllers (S1, S2, ...) communicating via said communication network.

**13.** The system of claim 11 or claim 12, wherein said communication network is a DALI protocol network.

**14.** A computer program product, loadable in the memory of at least one computer and including software code portions for performing the method of any of claims 1 to 7 when the product is run on a computer.

FIG. 1

FIG. 2

FIG. 3

FIG. 4

FIG. 5

# FIG. 6

EP 2 271 184 A1

# FIG. 7

Mo S1 S2 S3 S4 S5 S6 S7 S8 S9 S10 S11

# FIG. 8

START

100

102

104

106

STOP

| Europäisches Patentamt European Patent Office Office européen des brevets | **EUROPEAN SEARCH REPORT** | Application Number EP 09 16 4314 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/003279 A1 (CARMANAH TECHNOLOGIES CORP [CA]; BOURQUIN SEAN [CA]; HORTSING DAMIEN []) 8 January 2009 (2009-01-08) * page 4, line 16 - page 6, line 24 * * page 16, line 7 - page 19, line 10 * * page 24, line 14 - page 24, line 30; figures 1-7 * | 1-14 | INV. H05B37/02 |
| X | EP 1 408 276 A2 (KLUTH MANFRED [DE]) 14 April 2004 (2004-04-14) * paragraphs [0012], [0014], [0016], [0029], [0030], [0043] * * figure 4 * | 1-6,8-14 | |
| X | GB 2 444 734 A (HOWE ANDREW ROBERT LINTON [GB]) 18 June 2008 (2008-06-18) * page 1, line 30 - page 3, line 35; figure 1 * | 1-4, 8-12,14 | |
| X | GB 2 455 504 A (DOBSON CHALMERS RICHARD BUTLER [GB]) 17 June 2009 (2009-06-17) * the whole document * | 1-3,8 | |
| | | | TECHNICAL FIELDS SEARCHED (IPC) |
| A | WO 03/098977 A1 (CELLUX AB [SE]; MANGOLD STEPHAN [SE]; KAARRMAN LARS [SE]; HEDSTROEM MA) 27 November 2003 (2003-11-27) * abstract; figure 1 * | 1,8 | H05B |
| A | BE 1 009 084 A6 (MORARIU MIRCEA [BE]) 5 November 1996 (1996-11-05) * page 2, lines 11-21 - page 2 * * page 7, line 6 - page 7, line 14; figure 1 * | 1,7-8 | |
| A | DE 10 2007 007031 A1 (LEHMANN MARIO [DE]) 30 August 2007 (2007-08-30) * abstract; figure 1 * | 1,7-8 | |

The present search report has been drawn up for all claims

| Place of search | Date of completion of the search | Examiner |
|---|---|---|
| The Hague | 9 November 2009 | Speiser, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 16 4314

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2009

| Patent document cited in search report | | Publication date | Patent family member(s) | | Publication date |
|---|---|---|---|---|---|
| WO 2009003279 | A1 | 08-01-2009 | NONE | | |
| EP 1408276 | A2 | 14-04-2004 | AT | 438825 T | 15-08-2009 |
| | | | DE | 10343062 A1 | 27-05-2004 |
| GB 2444734 | A | 18-06-2008 | NONE | | |
| GB 2455504 | A | 17-06-2009 | NONE | | |
| WO 03098977 | A1 | 27-11-2003 | AT | 333205 T | 15-08-2006 |
| | | | AU | 2003234958 A1 | 02-12-2003 |
| | | | EP | 1512314 A1 | 09-03-2005 |
| | | | SE | 521058 C2 | 23-09-2003 |
| | | | SE | 0201513 A | 23-09-2003 |
| BE 1009084 | A6 | 05-11-1996 | NONE | | |
| DE 102007007031 | A1 | 30-08-2007 | NONE | | |

EPO FORM P0459

For more details about this annex : see Official Journal of the European Patent Office, No. 12/82